# EUROPEAN PATENT APPLICATION

(11) **EP 4 575 219 A1**
(43) Date of publication of application: **25.06.2025**
(21) Application number: 24218237.6
(22) Date of filing: 09.12.2024
(51) Int. Cl.: F02M 55/02, F02M 69/46

(54) **DELIVERY PIPE FOR ENGINE**

(30) Priority: 18.12.2023 JP 2023213060
(71) Applicant: MIKUNI CORPORATION, Chiyoda-ku Tokyo 101-0021 (JP)
(72) Inventor: KIKU, Yuta, Kanagawa, 2500055 (JP); NARAYAN, Srinivasan Anurag, Kanagawa, 2500055 (JP)
(74) Representative: SSM Sandmair

(57) **Abstract**

The present invention provides a delivery pipe for an engine that can support a pipe main body in a posture, in which an opening portion is directed upward, in welding of a plug and can prevent unnecessary extension of an entire length. A delivery pipe of the present invention includes: a pipe main body 2 being formed of a synthetic resin, in which a large-diameter portion 5 having a collar shape is formed on one end side, one end of a fuel passage 4 in an internal portion and along an axis line has an opening portion 6 formed in the large-diameter portion 5, and as outer periphery protrusion portions, bracket portions 8l and 8r and a plurality of injector connection portions 10l and 10r are integrally formed with an outer periphery surface; and a plug 3 being joined to the large-diameter portion 5 and blocking the opening portion 6. A first support surface 17 to be supported by a first fixing jig 21r is formed on the injector connection portion 10r closest to one end side, a second support surface 19 to be supported by a second fixing jig 21l is formed on an opposite side to the first support surface 17 around the axis line as a center and on another end side of the large-diameter portion 5, and the first and second support surfaces 17 and 19 have flat surface shapes facing another end side.

## Description

### BACKGROUND OF THE INVENTION

### Field of the Invention

The present invention relates to a delivery pipe for an engine.

### Description of the Related Art

For example, Patent Document 1 discloses a delivery pipe in which a main body portion having a tubular shape whose one end is open and a plug are each fabricated with a synthetic resin material and the plug is liquid-tightly welded to an opening end portion of the main body portion. A delivery passage for supplying fuel is formed along an axis line in the main body portion, a large-diameter portion having a collar shape is formed in one end portion of the main body portion, and the delivery passage is open to an outside via the opening end portion formed in the large-diameter portion. The opening end portion is formed for demolding in injection molding of the main body portion, but because the opening end portion has to be blocked for providing a function of distributing fuel, the plug is welded to the large-diameter portion as described above.

When the plug is welded, the main body portion is set to a posture in which the opening end portion is open upward, fixing jigs of an ultrasonic welding device are disposed on a lower surface of the large-diameter portion from its left and right, and the large-diameter portion is supported from a lower area by those fixing jigs. The plug is disposed on the large-diameter portion and welded thereto by applying ultrasonic vibrations to the plug while the plug is pressurized from an upper area by a horn of the ultrasonic welding device.

### PRIOR ART DOCUMENT

### Patent Document

Patent Document 1: Japanese Patent No. 6977132

### SUMMARY OF THE INVENTION

On a main body portion of a delivery pipe, for example, an injector connection portion to be coupled with an injector, a bracket portion for attaching the delivery pipe to an engine, and so forth are integrally formed. In a case where the injector connection portion and the bracket portion are adjacent to a large-diameter portion, a fixing jig which supports the large-diameter portion from a lower area cannot be disposed in welding work. Thus, the large-diameter portion is spaced apart upward from the injector connection portion and the bracket portion, and a space in which the fixing jig can be disposed has to be secured. As a result, there has been a problem that an entire length of the delivery pipe is unnecessarily extended by an amount of spaced arrangement, arrangement of the delivery pipe and the injector is restricted, and mountability on the engine is deteriorated.

The present invention has been made for solving such problems, and an object thereof is to provide a delivery pipe for an engine that can support a pipe main body in a welding posture, in which an opening portion is directed upward, in welding work for a plug and can improve mountability on an engine by previously preventing unnecessary extension of an entire length.

To achieve the above object, a delivery pipe for an engine according to one aspect of the present invention is a delivery pipe for an engine, the delivery pipe including: a pipe main body being formed of a synthetic resin, in which a large-diameter portion having a collar shape is formed on one end side, one end of a fuel passage formed in an internal portion along an axis line has an opening portion formed in the large-diameter portion, and as outer periphery protrusion portions, a bracket portion for attachment to an engine and a plurality of injector connection portions, which are juxtaposed in an axis line direction and to which injectors are respectively connected, are integrally formed with an outer periphery surface; and a plug being joined to the large-diameter portion of the pipe main body and blocking the opening portion, in which a first support surface to be supported by a first fixing jig is formed on the outer periphery protrusion portion positioned closest to one end side, a second support surface to be supported by a second fixing jig is formed on an opposite side to the first support surface around the axis line as a center and on another end side of the large-diameter portion, and the first support surface and the second support surface are formed to have flat surface shapes facing another end side.

As another aspect, the first support surface and the second support surface may be formed on opposite sides at 180° around the axis line of the pipe main body as the center.

As another aspect, the outer periphery protrusion portion positioned closest to one end side may be the injector connection portion, the first support surface and the second support surface may be surfaces vertical to the axis line, and the first support surface may be formed on an outer periphery surface, which has a cylindrical shape, of the injector connection portion.

As another aspect, the outer periphery protrusion portion positioned closest to one end side may be the bracket portion, the first support surface and the second support surface may be surfaces vertical to the axis line, and the first support surface may be formed on the bracket portion.

As another aspect, a reinforcement rib to which the plurality of injector connection portions are coupled may be integrally formed with the outer periphery surface of the pipe main body, and the first support surface may have a region being notched to correspond to the reinforcement rib.

As another aspect, an engagement portion may be formed in the injector connection portion, the engagement portion maintaining a coupler to be connected to a connector of the injector in a posture directed in an oblique direction to a side of the pipe main body and one end side.

As another aspect, the second support surface may be formed with a step between the outer periphery surface of the pipe main body and the outer periphery surface of the large-diameter portion, have a surface facing the other end side and being vertical to the axis line, and have a circular-arc-shaped region surrounding the outer periphery surface of the pipe main body.

As another aspect, the outer periphery protrusion portion positioned closest to one end side may integrally be formed with the large-diameter portion.

A delivery pipe for an engine according to aspects of the present invention can support a pipe main body in a welding posture, in which an opening portion is directed upward, in welding work for a plug and can improve mountability on an engine by previously preventing unnecessary extension of an entire length.

### BRIEF DESCRIPTION OF THE DRAWINGS

FIG. 1 is a perspective view illustrating a delivery pipe for an engine in an embodiment;
FIG. 2 is an exploded perspective view illustrating the delivery pipe;
FIG. 3 is a front view illustrating the delivery pipe;
FIG. 4 is a right side view illustrating the delivery pipe;
FIG. 5 is an enlarged cross-sectional view corresponding to a section A in FIG. 3;
FIG. 6 is a cross-sectional view taken along line VI-VI in FIG. 5;
FIG. 7 is a front view illustrating a pipe main body which is supported by fixing jigs in welding work for a plug;
FIG. 8 is a front view illustrating the pipe main body in a case where the plug is pressurized by a movable jig; and
FIG. 9 is a plan view illustrating the pipe main body which is supported by the fixing jigs.

### DETAILED DESCRIPTION OF THE INVENTION

One embodiment of a delivery pipe for an engine in which the present invention is embodied will hereinafter be described.

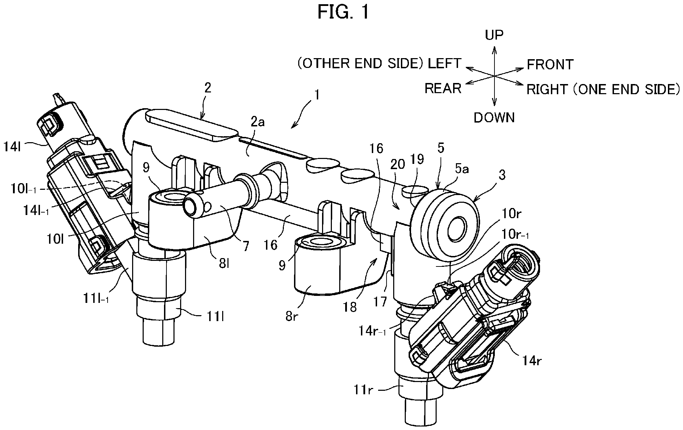

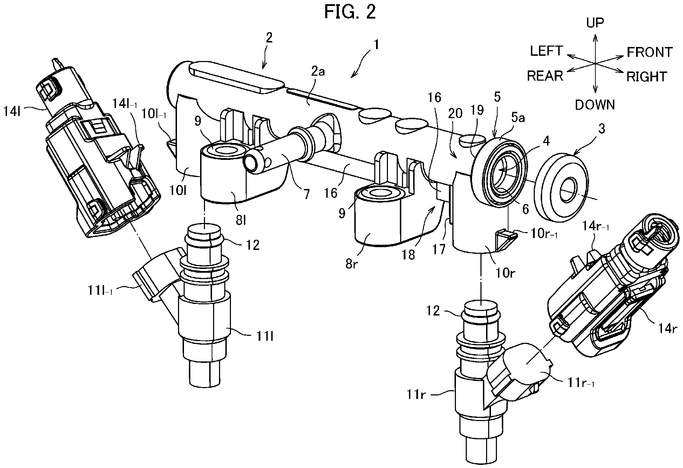

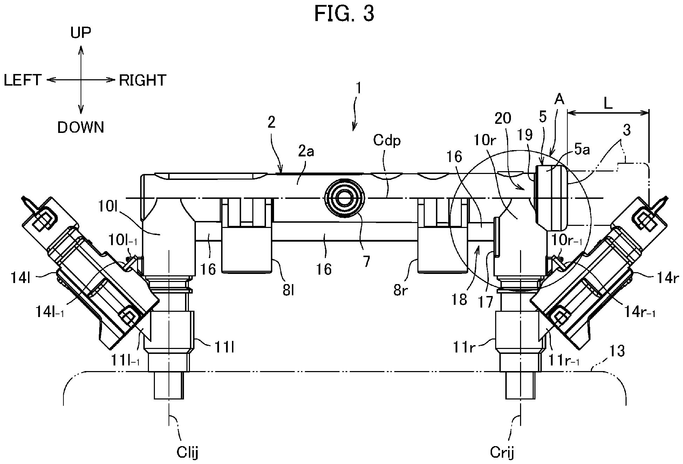

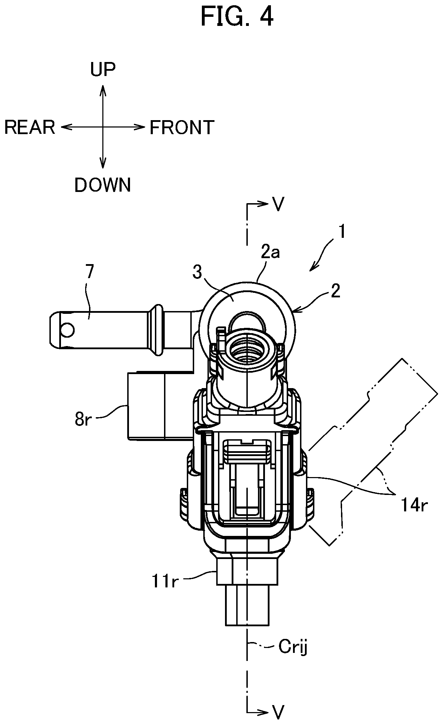

FIG. 1 is a perspective view illustrating the delivery pipe of the present embodiment, FIG. 2 is an exploded perspective view thereof, FIG. 3 is a front view thereof, and FIG. 4 is a right side view thereof.

A delivery pipe 1 of the present embodiment is applied to a two-cylinder engine which is mounted on a four-wheeled buggy as one kind of a so-called all terrain vehicle (ATV). In the drawings, the engine is positioned below the delivery pipe 1. In the following description, an up-down direction in FIG. 3 will be referred to as up and down, a left-right direction in FIG. 3 will be referred to as left and right, directions orthogonal to the page of FIG. 3 will be referred to as front and rear, and each of the directions will thereby be expressed. A right side in the present embodiment corresponds to one end side of the present invention, and a left side corresponds to the other end side of the present invention.

As illustrated in FIG. 1 to 3, the delivery pipe 1 is formed with a pipe main body 2 and a plug 3 which are formed of a synthetic resin, and those members 2 and 3 are fabricated by injection molding using a synthetic resin material, for example. The pipe main body 2 has a tubular shape extending in the left-right direction along an axis line Cdp, and its internal portion serves as a fuel passage 4. A left end of the fuel passage 4 is blocked, a large-diameter portion 5 having a circular collar shape is integrally formed at a right end of the fuel passage 4, and the right end of the fuel passage 4 is open to an outside via an opening portion 6 formed in a right end surface of the large-diameter portion 5.

A nipple portion 7 is provided to protrude rearward at a left-right center of the pipe main body 2, and in an assembled state where the delivery pipe 1 is assembled to the engine, a fuel hose provided to extend from a vehicle body side is connected to the nipple portion 7. Bracket portions 8l and 8r for attachment to the engine are integrally formed respectively on both of left and right sides of the nipple portion 7 on the pipe main body 2. Each of the bracket portions 8l and 8r is provided to protrude downward and rearward from an outer periphery surface 2a of the pipe main body 2, and a bush 9 is fitted in each of the bracket portions 8l and 8r by insert molding. In an assembled state to the engine, each of the bracket portions 8l and 8r is fastened to the engine by a bolt from an upper area via the bush 9, and the delivery pipe 1 is thereby fixed to a desired position.

While corresponding to cylinders of the engine, two injector connection portions 10l and 10r are juxtaposed on the pipe main body 2 along an axis line direction. One injector connection portion 10l is positioned at a left end of the pipe main body 2, and the other injector connection portion 10r is positioned at a right end, that is, adjacently to the large-diameter portion 5. Each of the left and right bracket portions 8l and 8r and left and right injector connection portions 10l and 10r corresponds to "an outer periphery protrusion portion" of the present invention, and the injector connection portion 10r on the right side corresponds to "an outer periphery protrusion portion positioned closest to one end side" of the present invention. Because the relationship between the injector connection portion 10r on the right side and the large-diameter portion 5 relates to the gist of the present invention, details of those will be described later.

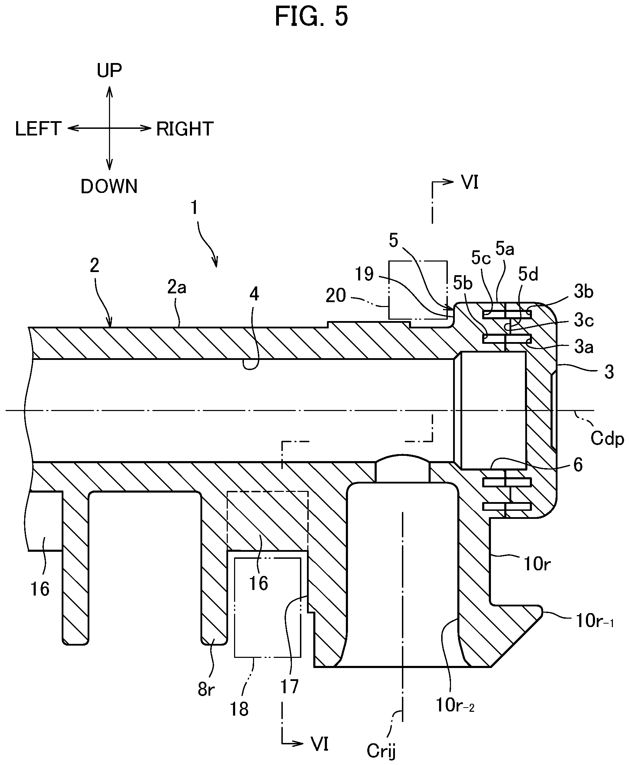

Each of the injector connection portions 10l and 10r protrudes downward, its outer periphery surface has a cylindrical shape, and at its lower end, a fitting hole is formed (only the fitting hole 10r-2 on the right side is illustrated in FIG. 5). In the assembled state to the engine, upper end portions of injectors 111 and 11r are fitted in the fitting hole of the injector connecting portion 10l and the fitting hole 10r-2 of the injector connection portion 10r respectively in a state where the upper end portions are liquid-tightly retained by O-rings 12. A lower end portion of each of the injectors 111 and 11r is fitted in a fitting hole of an intake manifold 13 of the engine, which is indicated by a dash-dot-dot line in FIG. 3, in a liquid-tightly retained state.

As illustrated in FIGs. 1, 3, and 4, connectors 111-1 and 11r-1 are respectively provided on side surfaces of the injectors 111 and 11r, the connector 111-1 on the left side is directed in an oblique upward-leftward direction, and the connector 11r-1 on the right side is directed in an oblique upward-rightward direction. In the assembled state to the engine, couplers 141 and 14r of harnesses provided to extend from the vehicle body side are respectively connected to those connectors 111-1 and 11r-1, and the injectors 111 and 11r are driven in accordance with driving signals supplied from a controller for engine control.

An engagement projection portion 10l-1 is provided to protrude leftward on the outer periphery surface of the injector connection portion 10l on the left side, the engagement projection portion 10l-1 is fitted in an engagement recess portion 141-1 provided to protrude in the coupler 141 on the left side, and rotation of the injector 111 on the left side around an axis line Clij as a center is thereby restrained. Similarly, an engagement projection portion 10r-1 is provided to protrude rightward on the outer periphery surface of the injector connection portion 10r on the right side, the engagement projection portion 10r-1 is fitted in an engagement recess portion 14r-1 provided to protrude in the coupler 14r on the right side, and rotation of the injector 11r on the right side around an axis line Crij as a center is thereby restrained. The engagement projection portion 10r-1 of the injector connection portion 10r on the right side corresponds to "an engagement portion" of the present invention.

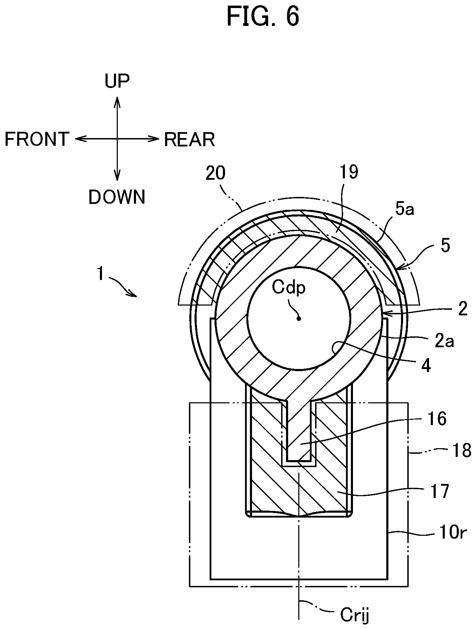

FIG. 5 is an enlarged cross-sectional view corresponding to a section A in FIG. 3, and FIG. 6 is a cross-sectional view taken along line VI-VI in FIG. 5.

As illustrated in FIGs. 3, 5, and 6, a reinforcement rib 16, to which the injector connection portions 10l and 10r and the bracket portions 8l and 8r are each coupled, is integrally formed with a lower side of the outer periphery surface 2a of the pipe main body 2, and rigidity of the delivery pipe 1 is thereby enhanced. A first support surface 17 having a flat surface shape facing left is formed in the outer periphery surface of the injector connection portion 10r on the right side. In other words, the first support surface 17 has a surface vertical to an axis line Cdp of the pipe main body 2. As hatched in FIG. 6, the first support surface 17 has a quadrangular region, which is notched to correspond to the reinforcement rib 16, and reaches the outer periphery surface 2a of the pipe main body 2. Because the injector connection portion 10r on the right side and the bracket portion 8r on the right side are arranged apart in the left-right direction, on the left side of the first support surface 17, a first space 18 is necessarily formed in which fixing jigs 211 and 21r of an infrared welding device described later are capable of being disposed and which is indicated by dash-dot-dot lines. In other words, in the delivery pipe of the present embodiment, the first space 18 is formed between the injector connection portion 10r and the bracket portion 8r.

The above-described large-diameter portion 5 is integrally formed with a part on the right side of the injector connection portion 10r on the right side. Specifically, as illustrated in FIG. 3, the large-diameter portion 5 is positioned on a right end side of the injector connection portion 10r on the right side, and a left lower portion of the large-diameter portion 5 is integrally formed with a right upper portion of the injector connection portion 10r. A step is formed between an outer periphery surface 5a of the large-diameter portion 5 and the outer periphery surface 2a of the pipe main body 2 having a smaller diameter, and a second support surface 19 is formed with this step. As hatched in FIG. 6, the second support surface 19 has a region, which has a circular arc shape of 180° around the axis line Cdp as a center and surrounds the outer periphery surface 2a of the pipe main body 2, and has a flat surface shape facing left as illustrated in FIG. 5. In other words, the second support surface 19 has a surface vertical to the axis line Cdp of the pipe main body 2. Because no large protruding object except the large-diameter portion 5 is formed on an upper side of the outer periphery surface 2a of the pipe main body 2, on the left side of the second support surface 19, a second space 20 is necessarily formed in which the fixing jigs 211 and 21r are capable of being disposed and which is indicated by dash-dot-dot lines.

Although the injector connection portion 10r and the large-diameter portion 5 are partially integrally formed, the large-diameter portion 5 is positioned on the right side relative to the injector connection portion 10r. Thus, in an axis line Cdp direction of the pipe main body 2, the second support surface 19 is positioned on the right side relative to the first support surface 17.

Meanwhile, as described above, the opening portion 6 is formed in a right side surface of the large-diameter portion 5, the plug 3 is joined to the large-diameter portion 5 by infrared welding, and the opening portion 6 is thereby blocked. Specifically, as illustrated in FIG. 5, grooves 5b and 5c as two (inner and outer) layers are formed in the right side surface of the large-diameter portion 5 to envelop the opening portion 6, and a welding region 5d having a ring shape is formed between the grooves 5b and 5c. Similarly, grooves 3a and 3b as two (inner and outer) layers are formed in a left side surface of the plug 3, and a welding region 3c having a ring shape is formed between the grooves 3a and 3b. Those welding regions 5d and 3c are brought into contact and are joined to each other by infrared welding, and the opening portion 6 is blocked by the plug 3. Although no illustration is provided, the welding regions 5d and 3c of the large-diameter portion 5 and the plug 3, which are not yet welded, slightly protrude in directions to approach each other compared to their inner and outer peripheries, and in the welding work, those protruding portions melt, as welding margins, into each other and are welded to each other. Note that cross-sectional shapes of the welding regions 5d and 3c are not limited to the above and can arbitrarily be changed.

The delivery pipe 1 configured in such a manner is assembled to the engine, and during an operation of the engine, fuel is supplied from the fuel hose, via the nipple portion 7, and to the delivery pipe 1. Fuel is distributed to the injector connection portions 10l and 10r via the fuel passage 4, injected into the intake manifold 13 in accordance with opening and closing of the injectors 111 and 11r, mixed with intake air, supplied as air-fuel mixture to interiors of the cylinders of the engine, and used for combustion.

Next, a description will be made about work procedures in a case where the plug 3 is welded to the large-diameter portion 5 of the pipe main body 2 in the above delivery pipe 1.

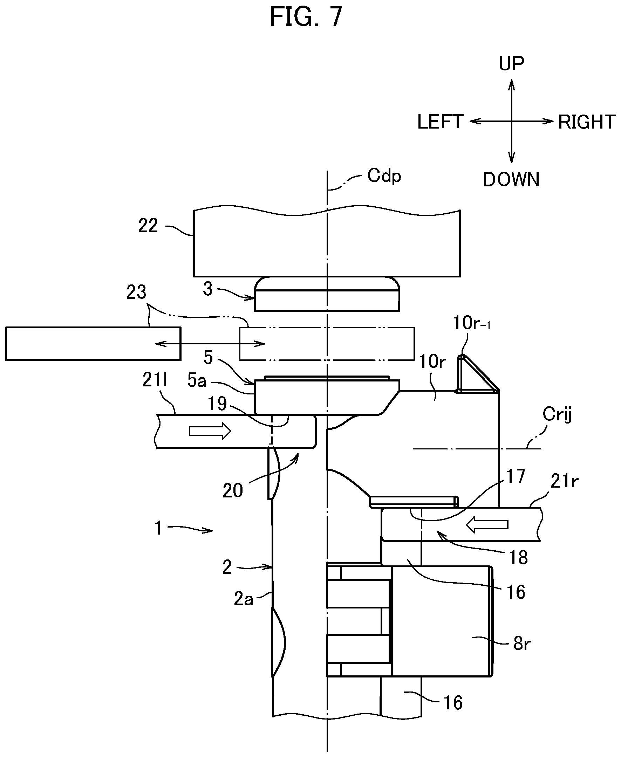

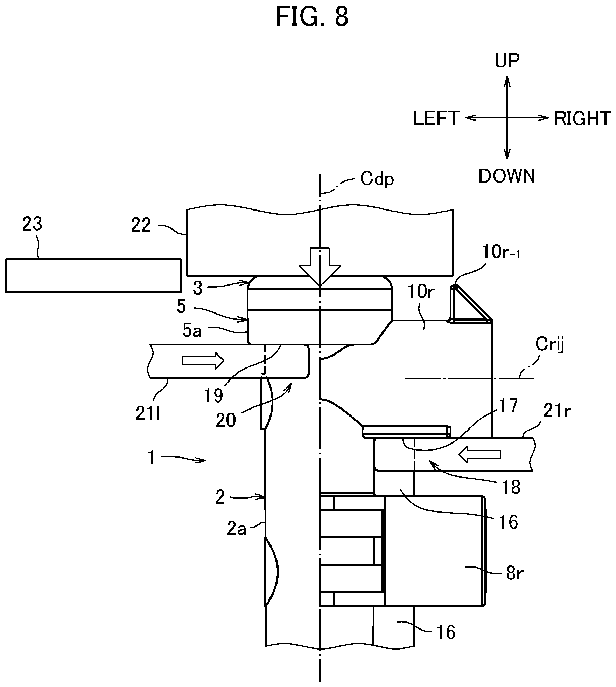

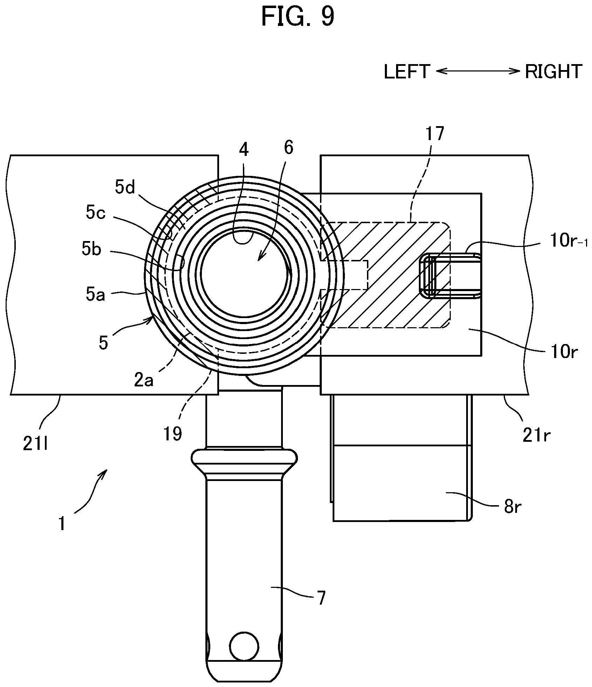

FIG. 7 is a front view illustrating the pipe main body 2 which is supported by the fixing jigs in the welding work for the plug 3, FIG. 8 is a front view illustrating the pipe main body 2 in a case where the plug 3 is pressurized by a movable jig, and FIG. 9 is a plan view illustrating the pipe main body 2 which is supported by the fixing jigs.

As illustrated in FIGs. 7, 8, and 9, the welding work for the plug 3 is carried out while the pipe main body 2 is retained in a welding posture in which the opening portion 6 is directed upward and the fixing jigs 211 and 21r are disposed from left and right. Accordingly, in the following description, an up-down direction along the axis line of the pipe main body 2 in the welding posture in FIG. 7 will be referred to as up and down, and a left-right direction in which the jigs are arranged will be referred to as left and right. The fixing jig 21r on the right side in the present embodiment corresponds to "a first fixing jig" of the present invention, and the fixing jig 211 on the left side in the present embodiment corresponds to "a second fixing jig" of the present invention.

First, as illustrated in FIGs. 7 and 9, the pipe main body 2 is set to the welding posture, and the fixing jigs 211 and 21r of the infrared welding device are disposed from left and right. Because the first space 18 is formed on a lower side of the first support surface 17, the fixing jig 21r on the right side is disposed in the first space 18 without any problem and supports the first support surface 17 of the injector connection portion 10r from a lower area. In a planar view in FIG. 9, because the first support surface 17 is notched to correspond to the reinforcement rib 16, the fixing jig 21r also has a shape which is notched to correspond to the reinforcement rib 16.

Because the second space 20 is formed on a lower side of the second support surface 19, the fixing jig 211 on the left side is disposed in the second space 20 without any problem and supports the second support surface 19 of the large-diameter portion 5 from a lower area. In the planar view in FIG. 9, because the second support surface 19 has the circular arc shape surrounding the outer periphery surface 2a of the pipe main body 2, the fixing jig 211 also has a shape which is hollowed out into a circular arc corresponding to the outer periphery surface 2a of the pipe main body 2.

The first and second support surfaces 17 and 19 are supported from the lower areas by the fixing jigs 211 and 21r in such a manner, and the pipe main body 2 is thereby maintained in a desired welding posture in which the opening portion 6 is directed upward. As illustrated in FIG. 7, a movable jig 22 to be moved up and down by a servo cylinder, which is not illustrated, is positioned above the large-diameter portion 5, and the plug 3 is fixed to the movable jig 22. In this state, the large-diameter portion 5 and the plug 3 are spaced apart in the up-down direction, an infrared lamp 23 is inserted between those as indicated by dash-dot-dot lines, and the welding regions 5d and 3c are irradiated with infrared rays and are melted. Next, the infrared lamp 23 is retracted to a position indicated by solid lines, and the plug 3 is lowered together with the movable jig 22 by the servo cylinder as illustrated in FIG. 8 and is pressurized and press-bonded onto the large-diameter portion 5. The welding regions 5d and 3c are welded together, the plug 3 is joined to the large-diameter portion 5, and the opening portion 6 is thereby blocked.

Next, work and effects of the delivery pipe 1 of the present embodiment will be described.

A major characteristic of the delivery pipe 1 of the present embodiment is that instead of the large-diameter portion 5, the existing injector connection portion 10r formed on the pipe main body 2 is supported from the lower area by the fixing jig 21r on the right side. For example, as in Patent Document 1, in FIG. 7, in a case where the large-diameter portion 5 is supported by the fixing jig 21r on the right side similarly to supporting the first support surface 17 of the large-diameter portion 5 by the fixing jig 211 on the left side, a space for disposing the fixing jig 21r on a lower side of the large-diameter portion 5 has to be secured. As a result, the large-diameter portion 5 is arranged apart upward from the injector connection portion 10r on the right side, and as indicated by dash-dot-dot lines in FIG. 3, an entire length of the delivery pipe 1 is unnecessarily extended by a dimension L.

The existing injector connection portion 10r is used for support by the fixing jig 21r on the right side, and the large-diameter portion 5 thereby does not have to be arranged apart from the injector connection portion 10r. Consequently, as indicated by solid lines in FIG. 3, the large-diameter portion 5 can integrally be formed with the part on the right side of the injector connection portion 10r, and the entire length of the delivery pipe 1 can thereby be shortened by the dimension L compared to a delivery pipe of Patent Document 1. Shortening of the entire length of the delivery pipe 1 leads to an improvement in mountability of the delivery pipe 1 in a limited engine room of a four-wheeled buggy, such as expansion of flexibility of arrangement of the delivery pipe 1 in the engine room.

Because spaced arrangement of the large-diameter portion 5 becomes unnecessary, flexibility about arrangement of the injectors 111 and 11r is improved. For example, as indicated by the dash-dot-dot lines in FIG. 3, in a case where the large-diameter portion 5 is arranged apart from the injector connection portion 10r, the large-diameter portion 5 interferes with the coupler 14r connected to the connector 11r-1 of the injector 11r on the right side. Thus, for example, as indicated by dash-dot-dot lines in FIG. 4, a measure for changing a posture of the connector 11r-1 by 90° around the axis line Crij of the injector 11r as the center is taken. However, when the coupler 14r protrudes forward from the delivery pipe 1, because a possibility of interference with peripheral components in the engine room becomes high, mountability of the delivery pipe 1 is deteriorated.

In the present embodiment, because the spaced arrangement of the large-diameter portion 5 becomes unnecessary, it becomes possible to arrange the connector 11r-1 and the coupler 14r on the right side of the injector connection portion 10r on the right side. Specifically, the engagement projection portion 10r-1 is provided to protrude rightward on the outer periphery surface of the injector connection portion 10r on the right side, and the engagement projection portion 10r-1 makes it possible to maintain the connector 11r-1 and the coupler 14r in postures directed upward and rightward as illustrated in FIGs. 3 and 4, in other words, postures directed to the pipe main body 2 side and the right side. Thus, protrusion of the coupler 14r in a front-rear direction can be prevented. As a result, a shape of a whole unit of the delivery pipe 1 which includes the injectors 111 and 11r, the connectors 111-1 and 11r-1, and the coupler 141 and 14r needs an occupied space in the left-right direction and the up-down direction to some extent but hardly needs an occupied space in the front-rear direction because no protruding portion is present. Thus, mountability of the delivery pipe 1 in the engine room can further be improved.

The second support surface 19 of the large-diameter portion 5 has the flat surface shape, and the first support surface 17 is intentionally formed to have the flat surface shape on the outer periphery surface, which has the cylindrical shape, of the injector connection portion 10r. In addition, the first support surface 17 and the second support surface 19 are formed on opposite sides at 180° around the axis line Cdp of the pipe main body 2 as the center. Because of the combination of those factors, the fixing jigs 211 and 21r can uniformly receive pressurization force from the movable jig 22 and can thereby stably support the pipe main body 2, and this contributes to proper welding of the plug 3 and further to a quality improvement.

Meanwhile, as hatched in FIG. 9, the first support surface 17 is notched to correspond to the reinforcement rib 16, and the fixing jig 21r also has the shape which is notched to correspond to the reinforcement rib 16. Thus, the first support surface 17 and the fixing jig 21r abut each other in a large area in a planar view and abut to a region close to the axis line Cdp of the pipe main body 2 in the left-right direction, in other words, to a region close to the pressurization force received from the movable jig 22, and because of the combination of those circumstances, the first support surface 17 can further stably be supported.

The second support surface 19 has the circular arc shape surrounding the outer periphery surface 2a of the pipe main body 2, and the fixing jig 211 also has the shape which is hollowed out into the circular arc corresponding to the outer periphery surface 2a of the pipe main body 2. Thus, the second support surface 19 and the fixing jig 211 abut each other in a large area in a planar view and abut to a region close to the axis line Cdp of the pipe main body 2 in the left-right direction, in other words, to a region close to the pressurization force received from the movable jig 22, and because of the combination of those circumstances, the second support surface 19 can further stably be supported. The above point contributes to proper welding of the plug 3 and further to a quality improvement.

Aspects of the present invention are not limited to this embodiment. For example, the above embodiment is embodied as the delivery pipe 1 to be applied to the two-cylinder engine mounted on the four-wheeled buggy, but this is not restrictive. For example, aspects of the present invention may be applied to a passenger vehicle, a motorcycle, a bicycle with an electric motor, or the like as a vehicle on which an engine is mounted, and a type of an engine can arbitrarily be changed.

In the above embodiment, a description is made about a case where a side on which the plug 3 is welded to an end portion of the fuel passage 4 is set as one end side (right side) and a side on which the plug 3 is not welded to an end portion of the fuel passage 4 is set as the other end side (left side), but it is sufficient that at least one end is welded to the plug 3, and aspects of the present invention are similarly applicable to a case where both ends are welded to the plugs 3, for example.

In the above embodiment, the first support surface 17 is formed on the injector connection portion 10r on the right side as the outer periphery protrusion portion, but this is not restrictive. Arrangement of the injector connection portions 10l and 10r and the bracket portions 81 and 8r on the pipe main body 2 is changed in accordance with various conditions such as requests from the engine side or spaces in the engine room, for example. Thus, in FIG. 3, it is possible that positions of the injector connection portion 10r and the bracket portion 8r on the right side are switched and the bracket portion 8r is formed in an adjacent position to the large-diameter portion 5, for example. In this case, because the bracket portion 8r on the right side corresponds to "the outer periphery protrusion portion positioned closest to one end side" of the present invention, the bracket portion 8r is integrally formed with the large-diameter portion 5, the first support surface 17 is formed, and the first space 18 in which the fixing jig 21r is capable of being disposed may thereby be formed between the first support surface 17 and the injector connection portion 10r.

### REFERENCE SIGNS LIST

1 delivery pipe
2 pipe main body
3 plug
4 fuel passage
5 large-diameter portion
6 opening portion
81 bracket portion (outer periphery protrusion portion)
8r bracket portion (outer periphery protrusion portion positioned closest to one end side)
10l injector connection portion (outer periphery protrusion portion)
10r injector connection portion (outer periphery protrusion portion positioned closest to one end side)
10r-1 engagement projection portion (engagement portion)
111, 11r injector
11r-1 connector
14r coupler
16 reinforcement rib
17 first support surface
19 second support surface
21r fixing jig (first fixing jig)
211 fixing jig (second fixing jig)

## Claims

1. A delivery pipe for an engine, the delivery pipe comprising:
a pipe main body being formed of a synthetic resin, in which a large-diameter portion having a collar shape is formed on one end side, one end of a fuel passage formed in an internal portion along an axis line has an opening portion formed in the large-diameter portion, and as outer periphery protrusion portions, a bracket portion for attachment to an engine and a plurality of injector connection portions, which are juxtaposed in an axis line direction and to which injectors are respectively connected, are integrally formed with an outer periphery surface; and
a plug being joined to the large-diameter portion of the pipe main body and blocking the opening portion, wherein
a first support surface to be supported by a first fixing jig is formed on the outer periphery protrusion portion positioned closest to one end side,
a second support surface to be supported by a second fixing jig is formed on an opposite side to the first support surface around the axis line as a center and on another end side of the large-diameter portion, and
the first support surface and the second support surface are formed to have flat surface shapes facing another end side.

2. The delivery pipe for an engine according to claim 1, wherein
the first support surface and the second support surface are formed on opposite sides at 180° around the axis line as the center.

3. The delivery pipe for an engine according to claim 1 or 2, wherein
the outer periphery protrusion portion positioned closest to one end side is the injector connection portion,
the first support surface and the second support surface are surfaces vertical to the axis line, and
the first support surface is formed on an outer periphery surface, which has a cylindrical shape, of the injector connection portion.

4. The delivery pipe for an engine according to claim 1 or 2, wherein
the outer periphery protrusion portion positioned closest to one end side is the bracket portion,
the first support surface and the second support surface are surfaces vertical to the axis line, and
the first support surface is formed on the bracket portion.

5. The delivery pipe for an engine according to claim 3, wherein
a reinforcement rib to which the plurality of injector connection portions are coupled is integrally formed with the outer periphery surface of the pipe main body, and
the first support surface has a region being notched to correspond to the reinforcement rib.

6. The delivery pipe for an engine according to claim 3, wherein
an engagement portion is formed in the injector connection portion, the engagement portion maintaining a coupler to be connected to a connector of the injector in a posture directed in an oblique direction to a side of the pipe main body and one end side.

7. The delivery pipe for an engine according to claim 1 or 2, wherein
the second support surface is formed with a step between the outer periphery surface of the pipe main body and the outer periphery surface of the large-diameter portion, has a surface facing the other end side and being vertical to the axis line, and has a circular-arc-shaped region surrounding the outer periphery surface of the pipe main body.

8. The delivery pipe for an engine according to claim 1 or 2, wherein
the outer periphery protrusion portion positioned closest to one end side is integrally formed with the large-diameter portion.
